Europäisches Patentamt

European Patent Office

Office européen des brevets

(11) Publication number: **0 355 641**
**A2**

## EUROPEAN PATENT APPLICATION

(21) Application number: 89114969.2

(51) Int. Cl.⁴: **B29C 43/40 , B29C 67/14**

(22) Date of filing: 12.08.89

(30) Priority: 24.08.88 US 235585
17.07.89 US 380349

(43) Date of publication of application:
28.02.90 Bulletin 90/09

(84) Designated Contracting States:
AT BE CH DE ES FR GB GR IT LI LU NL SE

(71) Applicant: MANVILLE CORPORATION
P.O. Box 5108
Denver, CO 80217(US)

(72) Inventor: Sherman, James Webster
7351 Whispering Oak
Sylvania Ohio 43560(US)
Inventor: Batdorf, Daniel Joseph
15452 Five Point Road
Perrysburg Ohio 43551(US)
Inventor: Kerscher, John Francis
1223 Applegate
Waterville Ohio 43566(US)

(74) Representative: Grättinger, Günter
Wittelsbacherstrasse 5 Postfach 16 49
D-8130 Starnberg(DE)

(54) Laminating tool and method.

(57) A molded bonded fibrous sheet is completely sealed in a facing sheet during the molding operation. A fibrous layer containing uncured binder is placed in a mold. Facing sheets covering the major faces of the layer are included. Under the application of heat and pressure the mold faces form the layer into the desired shape and thickness, while at the same time the cover sheets and fibrous layer are trimmed by cutting edges. A shoulder connecting the cutting edge of one of the molds to the mold face forces the adjacent sheet into contact with the other sheet, and the cured binder seals the sheets to each other and to the severed edge of the fibrous layer, thereby encapsulating the fibrous layer within the cover sheets. A similar arrangement can be utilized in connection with a press to adhesively apply a facing sheet to the body and edge portion of a previously formed substrate.

FIG. 3

# LAMINATING TOOL AND METHOD

## Cross Reference to Related Application

This application is a continuation-in-part of application Serial No. 07 235,585 filed August 24, 1988.

## Field of the Invention

This invention relates to the molding of bonded fibrous articles, and in particular to the molding of faced articles of this type. In addition, the invention relates to the laminating of a facing sheet to a previously formed substrate.

## Background of the Invention

In the manufacture of molded fibrous products, a sheet or blanket of fibrous material containing uncured binder typically is fed into a mold press which when activated heats and compresses the material to the desired end shape. The binder is cured by the heat and holds the compressed fibrous material in its molded shape. Examples of commercial products manufactured in this manner are fiber glass automotive hoodliners and headliners.

Such products conventionally have been installed in vehicles in nonencapsulated form. It has been suggested, however, as part of continuing efforts to improve the environment of workers, that fibrous hoodliners and headliners should be encapsulated to prevent fibers or dust from these products from entering the atmosphere of the automotive plant, which can occur after the hoodliner or headliner has been installed in the vehicle being assembled, particularly if it is subjected to vibration or shock.

To encase a hoodliner or headliner in film by the shrink-wrap method would require a separate operation and would be undesirable. The usual vacuum forming operation would also require a separate operation and would be impractical for high temperature applications. Sheeting material would have to be supported on a frame and heated to its softening temperature, then lowered into contact with one face of the hoodliner or topliner which is supported on a mold. Pinholes would have to be incorporated in the mold to permit the application of vacuum so as to draw the film into intimate contact with the upper contoured face of the product. A similar operation would have to be performed on the other side of the product. This two-step encapsulating method would be difficult to carry out because the first sheet vacuum-formed on the article would seal off the pinholes in the mold and would prevent drawing down the second sheet unless the first layer has perforations through which to draw a vacuum. Such a process would require a relatively tough and expensive film capable of withstanding the stresses to which it would be subjected during the encapsulating process.

It would obviously be desirable to avoid the problems and expense of encapsulating molded fibrous products in a separate manufacturing operation. Until this invention, however, no practical method for accomplishing this has been available.

In addition to the problem of encapsulating automotive hoodliners or headliners in film, it is often desirable to provide a decorative facing sheet on the interior side of a formed headliner for esthetic purposes. This entails a separate laminating operation which is often quite time consuming and expensive, requiring a specially designed laminating press formed to the contour of the headliner and a separate trimming operation following the laminating step. It would be desirable to be able to reduce the time and expense of the laminating step and preferably to do so without the need for a separate trimming operation.

## Summary of the Invention

In one aspect of the invention a molded fibrous product is encapsulated during the molding of the fibrous material, thus eliminating the need for a separate fabricating operation. The fibrous layer is introduced into the mold press sandwiched between flexible facing sheets which cover the major faces of the fibrous layer. In accordance with normal procedure, the mold elements are heated and caused to have relative movement toward each other to a closed position where the mold faces are spaced from each other a distance corresponding to the final compressed thickness of the molded product. In addition, means are provided for causing relative movement between the facing sheets adjacent the peripheral edges of the final product to bring the facing sheets into contact with each other at these edge locations. The heat from the mold elements causes the binder in the fibrous layer to flow into contact with the facing sheets and to be cured, thereby causing the sheets to be bonded to the fibrous layer. The facing sheets at the peripheral edges of the compressed molded fibrous layer adhere to the edges and to each other to seal the edges, thus completely encapsulating the fibrous product.

In a preferred arrangement the means for causing relative movement between the facing sheets comprises a shoulder portion on the first mold element extending between the periphery of the mold element and its mold face. The shoulder portion extends transversely of the adjacent portion of the mold face, and its width is substantially equal to the thickness of the faced molded fibrous article. Cutting means may also be provided for severing the facing sheets and the compressed fibrous layer adjacent the peripheries of the mold faces. Preferably the cutting means comprises a cutting edge on the first mold element and a cooperative edge on the second mold element, the cutting edges severing the facing sheets and the compressed fibrous layer during relative movement of the mold elements to their closed position.

In addition to sealing the peripheral edges of the molded fibrous article, the facing sheets can be made to seal the edges of any cutout portions of the fibrous layer in the interior of the article. As in the arrangement for sealing the peripheral edges of the product, shoulder means can be provided at the path of any such interior cutout to bring the facing sheets into contact with each other along the path, whereby they are bonded together upon curing of the binder in the fibrous layer.

In another aspect of the invention a flexible facing sheet is laminated to a substrate having a peripheral edge portion. The substrate is introduced into a press of compatible shape, and the facing sheet is positioned between a first press element and the substrate. Adhesive is provided between the facing sheet and the substrate. Upon relative movement of the press elements to their closed position the press elements cause the facing sheet to adhere to the substrate. At the same time relative movement between the facing sheet and the edge portion of the substrate is brought about adjacent the periphery of the press elements to bring the facing sheet into contact with the edge portion of the substrate and to be adhered thereto by the adhesive.

A shoulder portion on the first press element extending between the periphery of the press element and its press face functions in a manner similar to the previously mentioned shoulder portion on the mold elements to cause relative movement between the facing sheet and the edge portion of the substrate. In addition, cutting means similar to those previously mentioned in connection with the molding operation may also be provided for severing the facing sheet adjacent the periphery of the press faces to enable the facing sheet to cover the peripheral edge portion of the substrate.

Other features and aspects of the invention, as well as other benefits thereof, will readily be ascertained from the more detailed description of the invention which follows.

## Brief Description of the Drawing

FIG. 1 is a pictorial view of a faced molded fibrous article which has been encapsulated according to the invention;

FIG. 2 is an enlarged partial transverse sectional view taken on line 2-2 of FIG. 1;

FIG. 3 is a schematic side elevation of a mold press used to mold and encapsulate a fibrous article in accordance with the invention;

FIGS. 4A-4D are enlarged partial transverse sectional views of the peripheral portion of the area of the mold press indicated by the dotted circle 4 in FIG. 3, showing the sequential molding, encapsulating and severing operations of the invention;

FIGS. 5A-5D are enlarged partial transverse sectional views of the cutout portion of the area of the mold press indicated by the dotted circle 5 in FIG. 3, showing the sequential molding, encapsulating and severing operations of the invention;

FIGS. 6A-6C are enlarged partial transverse sectional views of the peripheral portion of the area of press elements depicting another embodiment of the invention, showing the sequential laminating and severing steps of a laminating operation;

FIG. 7 is a partial transverse sectional view of a substrate to which a facing sheet has been laminated in accordance with the embodiment of the invention shown in FIGS. 6A-6C; and

FIG. 8 is a partial transverse sectional view of a laminated substrate similar to that of FIG. 7, but showing a laminate with facing sheets on both sides thereof.

## Description of the Preferred Embodiment

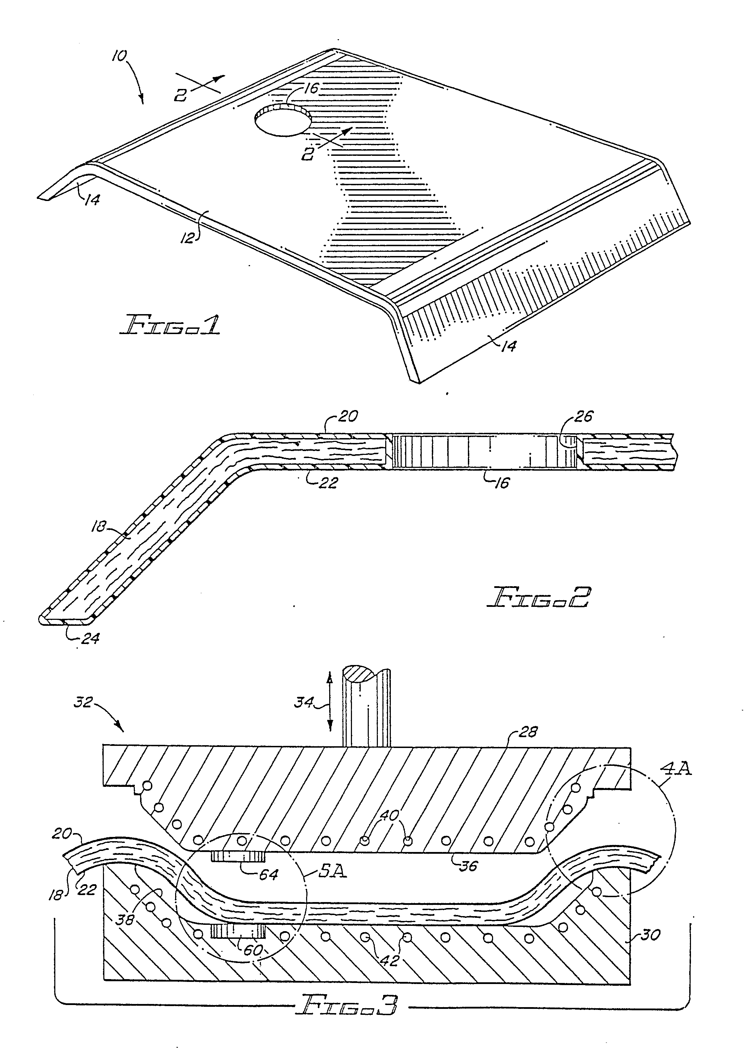

Referring to FIG. 1, a faced molded fiber glass product of the type capable of being formed by the present invention is indicated generally at 10. The product depicted may be a hoodliner or any other type of molded fibrous article which is desired to be encapsulated. Typically, the article includes a main body portion 12 and connected end portions 14 which extend at an angle to the main body portion. The main body portion is shown as containing a cutout 16. It will be understood that the product shown in FIG. 1 is for illustrative purposes only, and that it could be of other configurations and have more than one cutout or none at all.

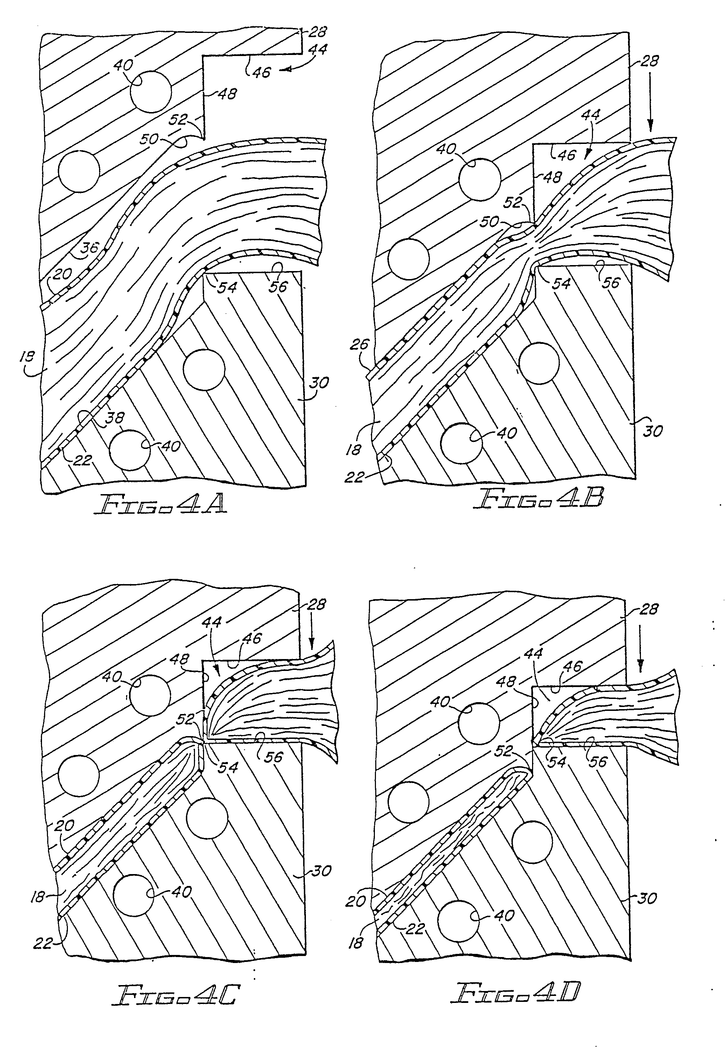

As shown in FIG. 2, the article 10 is comprised of molded fibrous material 18 which has been bonded together by cured binder distributed throughout the fibrous layer. Adhered to the upper and lower faces of the fibrous layer are facing sheets 20 and 22 which are sealed together at the peripheral edges 24 of the article and at the cutout edges 26. All surfaces of the fibrous material are thus covered and sealed to fully encapsulate the product and prevent escape of dust or fiber from the fibrous layer 18.

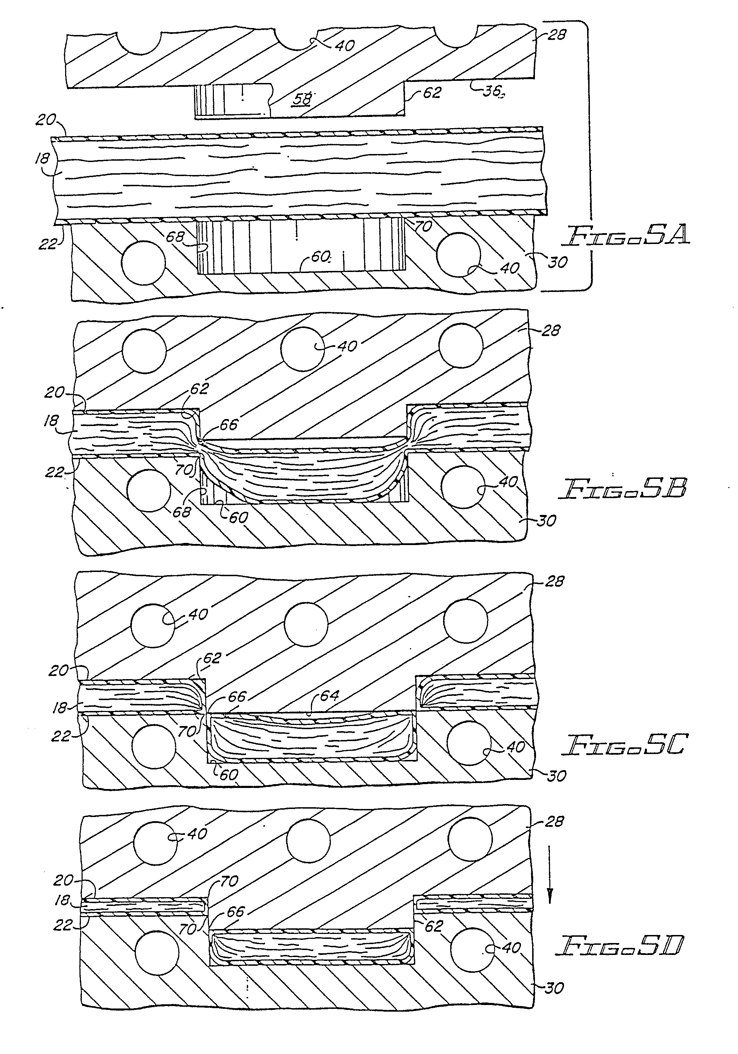

Referring to FIG. 3, to produce the product of FIGS. 1 and 2, a relatively thick layer of fibrous material 18 sandwiched between facing sheets 20 and 22 is inserted between the mold elements 28 and 30 of a mold press 32. The fibrous layer 18 would conventionally have a thickness in the range of 5 to 6 inches and would have little or no stiffness, lying draped over the bottom mold element 30. The facing sheets at this point are unattached to the fibrous layer. The mold element 30 is illustrated as being stationary while the mold element 28 is illustrated as being mounted for reciprocal movement as indicated by the arrow 34. It should be understood, however, that either mold element may be stationary or movable, or both can be mounted for movement, so long as they are capable of relative reciprocal movement toward and away from each other. Any suitable means for reciprocating the movably mounted mold elements may be employed, such as a hydraulic or pneumatic ram, not shown. The mold faces 36 and 38 of the mold elements 28 and 30 are heated by suitable means, such as by heated fluid passing through conduits 40 and 42 arranged in a tortuous path, to provide the heat necessary to cure the uncured binder in the fibrous layer 18.

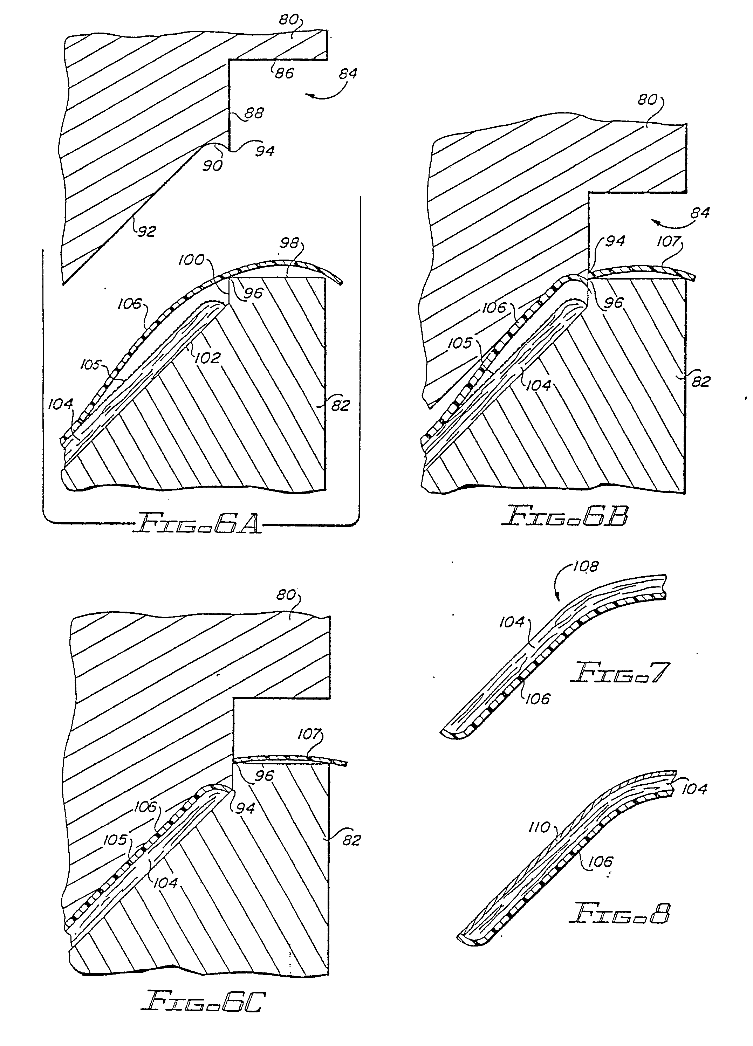

This initial arrangement of components is further shown in FIG. 4A, wherein their relationship at the periphery of the mold faces is brought out in more detail. The upper mold face 36 and the lower mold face 38 are contoured so as to produce a product having the desired thickness. The mold element 28 at this point in the manufacturing cycle has not yet been moved toward its closed position, and the fibrous layer and facing sheets remain draped over the mold face 38.

The mold element 28 contains a peripheral groove or recess 44 defined by the horizontal surface 46 and the vertical surface 48 at the edge of the mold element 28. Adjacent the recess 44 is a shoulder 50 which connects the edge of the mold face 36 and the vertical surface 48. The width of the shoulder 50 is substantially equal to the thickness of the finished molded product, as will be explained in more detail below. The intersection of the vertical surface 48 and the shoulder 50 comprises a cutting edge 52 which is aligned slightly inwardly of cutting edge 54 on the lower mold element 30. As illustrated, the lower cutting edge 54 is formed at the intersection of the edge of the mold face 38 and the horizontal surface 56 at the edge of the mold element 30. This arrangement allows the cutting edge 52 to move into cutting engagement with the stationary cutting edge 54 and to continue moving downwardly beyond it, as explained in more detail below.

As the mold element 28 is moved toward the mold element 30, it will reach the point depicted in FIG. 4B, wherein the movable mold face 36 has contacted the facing sheet and fibrous layer laminate and has begun to compress the fibrous material 18, particularly in the area adjacent the cutting edge 54 where the spacing between the mold faces 36 and 38 is the least. Although the cutting edge 52 is shown in contact with the upper facing sheet 20, it is still a substantial distance above the cutting edge 54. It will be seen that continued downward movement of the mold element 28 will cause the cutting edge 52 and the shoulder 50 to contact the upper facing sheet 20 and push it toward the lower facing sheet 22, further compressing the adjacent fibrous material 18 in the process.

As the mold element 28 continues its downward movement it eventually reaches the point indicated in FIG. 4C, wherein the cutting edge 52 has reached the cutting edge 54. The body of the fibrous material 18 has been compressed to a greater extent than before but still not to its final thickness. The fibrous material at the shoulder 50, however, has been compressed to its final thickness and the facing sheet 20 has been folded over by the movement of the shoulder 50 and the cutting edge 52 to the point where it is now in contact with the lower facing sheet 22. The facing sheets have not been severed at this point, but remain in contact at the point where they exit from the adjacent cutting edges.

As shown in FIG. 4D, the final stage of movement of the mold element 28 brings it to the position illustrated, wherein the mold faces 36 and 38 are spaced from each other a distance corresponding to the width of the shoulder 50. The mold faces are held in this position for a period of time sufficient to allow the heat from the conduits 40 and 42, shown in FIG. 3, to cure the binder in the compressed fibrous layer. Note that the cutting edge 52 has moved down beyond the cutting edge 54, severing the facing sheets in the process. At the conclusion of the curing cycle, the mold press is opened and the finished product removed. The process has thus produced a shaped, molded fibrous article covered on its faces and edges with a facing sheet in order 'to encapsulate the fibrous product.

The operating parameters of the process are variable, depending on the type and amount of binder and the density and thickness of the fibrous material. In the manufacture of a fiber glass hoodliner, for example, phenolic binder is typically present in amounts of 10% to 20%, distributed uniformly throughout the fibrous layer. Hold temperatures in the range of 300/x/F to 600/x/F are provided in order to cure the binder. The density of the fiber glass layer prior to molding is typically in the order of 0.2 pcf, while the density of the finished molded product is typically in the order of 16 pcf. The facing sheets may comprise any flexible material capable of conforming to the final shape of the product and of adhering to the cured binder. Examples of such a sheet are thin mats formed of a blend of glass fibers and sheets comprised of rayon/polyester blends. If the sheet is such that it is capable of being thermoformed at the temperatures to which it is exposed in the mold, end portions of the sheet material will adhere to each other in areas of contact at the edges of the molded product.

As stated previously, the finished product may desirably contain one or more holes or cutouts, depending upon the design of the vehicle in which the hoodliner or headliner is to be installed. FIGS. 5A-5D illustrate the steps by which the edges of an interior cutout in the fibrous layer may be sealed by the facing sheets. Referring to FIG. 5A, wherein it will be understood that the components depicted may simply be interior portions of the same components identified in FIGS. 4A-4D, the mold element 28 incorporates a depending portion 58, and the mold element 30 contains a recess 60 substantially aligned with the depending portion 58. The depending portion 58 is defined by a vertical surface or shoulder 62 and a lower horizontal surface 64, and the intersection of the two surfaces forms a cutting edge 66. In the same manner, the intersection of the mold face 38 of the mold element 30 with the vertical surface 68 of the recess 60 forms a cutting edge 70. As in the arrangement at the peripheral cutting edges, the cutting edge 62 is aligned slightly to the inside of the cutting edge 70, allowing the vertical shoulder 62 of the depending portion 58 to slide past the vertical surface 68 as the mold press is closed.

The action of the mold faces and cutting edges in forming a cutout in the faced fibrous layer is similar to the action described in connection with FIGS. 4A-4D. As shown in FIG. 5B, the cutting edge 66 contacts the faced fibrous layer first, and begins to compress the fibrous material in the region of the contact. At the same time the vertical shoulder 62 gently folds the upper facing sheet 20 toward the bottom facing sheet 22. As the mold element 28 continues its downward movement it will reach the point illustrated in FIG. 5C, wherein the cutting edges 66 and 70 are adjacent each other and the fibrous material has been compressed and broken at this point. The action of the cutting edge 66 and the shoulder 62 will have brought the upper facing sheet 20 down to the point of contact with the lower facing sheet 22. The fibrous layer and covering facing sheets in the area being cut out from the material simply remain in the recess 60 in uncompressed condition.

Continued movement of the mold element 28 results in the fibrous layer being compressed to its final thickness, as shown in FIG. 5D, and in the fibrous layer and the facing sheets being severed by the cutting edges 66 and 70, separating the severed material in the recess 60 from the main body of the faced fibrous layer. As in the case described in connection with the peripheral cutting and forming operation, the heat applied to the mold faces causes the binder in the fibrous layer to be cured, thereby adhering the facing sheets to the compressed and molded fibrous material along the faces of the layer as well as at the severed edges of the layer.

Although it has been stated that the cured binder at the edges of the molded fibrous product will adhere the facing sheet or film to the edges, some types of film may become heated to a point at which they become thermoformable and are thus additionally held in place by the sealing together of the edge portions of the upper and lower sheets of film. In either case, the facing sheets are sealed at the edges of the product to fully enclose and encapsulate the product.

In another aspect of the invention it is often desirable to provide a decorative facing sheet on the interior surface of a previously formed headliner. This normally entails a separate laminating operation whereby contoured press elements press the facing sheet against the headliner under suitable pressure to cause adhesive to bond the two together. This is normally followed by a trimming operation whereby portions of the facing sheet which extend beyond the edge of the headliner are trimmed away. The present invention allows the laminating operation to be carried out in a single step.

Referring to FIG. 6A, press elements 80 and 82 are mounted for relative reciprocal movement in a manner similar to the mold elements of FIGS. 4A-4D. As in the case of the mold element 28, the press element 80 is provided with a peripheral recess 84 defined by the horizontal surface 86 and the vertical surface 88. Adjacent the recess 84 is a shoulder 90 which connects the press face 92 and the vertical surface 88. The width of the shoulder 90 is substantially equal to the thickness of the substrate to which the facing sheet is to be laminated. As in the previous embodiment, the intersection of the vertical surface 88 and the shoulder 90 comprises a cutting edge 94. This is aligned slightly inwardly of the cutting edge 96 on the lower press element 82 which is formed by the intersection of the horizontal surface 98 and the end of the vertical extension 100 of the press face 102.

As illustrated in FIG. 6A, a substrate 104, which could be a previously formed bonded fibrous contoured headliner, only the peripheral portion of which is shown, is placed on the face 102 of the lower press element 82 while the press is in its open condition. It will be understood that the press elements can be either elements of a separate tool designed for the purpose of carrying out the laminating operation or the mold elements of the previously described embodiment. A facing sheet 106, normally a decorative sheet, is then draped over the lower press element 82. As illustrated, the upper side of the substrate has previously been coated with adhesive 105 to bond the facing sheet to the substrate during the laminating operation. Alternatively, the bottom side of the facing sheet could be coated with adhesive to accomplish the same thing. It is also possible to insert adhesive in sheet form between the facing sheet and the substrate so that under adequate pressure it will flow and bond the facing sheet and substrate together. In any case, the thickness of the substrate 104 is substantially equal to the distance between the upper and lower press elements when in their closed positions.

As shown in FIG. 6B, relative movement of the press elements 80 and 82 toward each other will cause the cutting edges 94 and 96 to be engaged in cutting relationship, resulting in the peripheral portion 107 of the sheet 106 extending beyond the cutting surfaces being severed from the main body of the facing sheet. At this point the upper press element 80 has not yet contacted the substrate 104 but, as illustrated, may have contacted portions of the facing sheet which have billowed or bulged tip from the substrate 104.

As shown in FIG. 6C, the final position of the press elements 80 and 82 results in their being spaced apart a distance substantially equal to the thickness of the substrate 104. This still allows room for the facing sheet because the thickness of the facing sheet 106 is normally negligible compared to the thickness of the substrate. In the event the facing sheet is of somewhat greater thickness the fibrous substrate would normally be compressible to a degree that would allow the upper press element 80 to reach its lowermost position. As in the previous embodiment the press faces are spaced from each other a distance corresponding to the width of the shoulder 90, allowing the facing sheet to extend around the edge of the substrate.

The press elements are held in this position until the adhesive has been set by the applied pressure.

Because the press elements 80 and 82 need not be heated to cause the preferred pressure sensitive adhesive to set, they have not been shown as containing any heating means. It will be understood, however, that the same molding press used to mold a fibrous layer into a headliner can be used for the laminating operation, without, of course, activating the heating means.

The end portion of the resulting faced substrate is shown in FIG. 7 wherein the laminate 108 is comprised of a a relatively thick substrate 104 faced by the sheet 106. The peripheral edge of the substrate is covered by the sheet 106 as a result of the action of the press elements. The face of the substrate 104 opposite the sheet 106 is unfaced in accordance with a typical embodiment of the product. As shown in FIG. 8, the opposite face of the substrate 104 may be faced with a separate sheet if desired. In the example shown, a fiber glass scrim 110 on the back of the substrate 104 meets with the facing sheet 106 to fully encircle the substrate. The fiber glass scrim or any other backing sheet may have been previously adhered to the substrate or may be adhered to the substrate in the same operation in which the decorative facing is applied.

It will be understood that the facing sheet 106 may be any type of facing sheet desired to cover the exposed face of the substrate, as long as it is flexible and can be draped over the substrate in the press. A typical decorative facing sheet, for example, would be a nap nylon/foam laminate which typically would have a thickness of about 3 mm.

Although the preferred embodiment of the invention has been described in connection with the formation of a laminate the edges of which are covered with a facing sheet, it will be understood by those skilled in the art that by varying the edge configuration of the substrate the facing sheet can be made to extend out to the edge of the substrate without covering it.

Although this embodiment of the invention has not been described in connection with a substrate containing interior cutouts, it will be understood that a facing sheet can be applied to such a substrate in the same general manner as just described, utilizing a press element arrangement similar to the arrangement shown in FIGS. 5A-5D.

It should now be appreciated that the invention provides a practical, convenient way to encapsulate a molded fibrous product within a facing without having to resort to a separate operation. All edges of the article are covered, including interior edges resulting from the creation of holes or cutouts in the interior of the product. In addition, existing molding equipment may be modified for use in accordance with the present invention, thus greatly reducing the cost of implementing the invention.

It will also be appreciated that the invention provides a convenient inexpensive way of applying a facing sheet to a previously formed substrate, including a substrate formed of molded bonded glass fibers, without requiring a separate trimming operation. The laminating process can be used to cause the facing sheet to extend about the edges of the substrate so as to present a uniform appearance without the need for a separate edge covering operation.

It should now be understood that the invention is not necessarily limited to all the specific details described in connection with the preferred embodiment, but that changes to certain features of the preferred embodiment which do not affect the overall basic function and concept of the invention may be made by those skilled in the art without departing from the spirit and scope of the invention, as defined in the appended claims.

## Claims

1. Apparatus for laminating a flexible facing sheet to a substrate of predetermined thickness having a peripheral edge portion, comprising:
first and second press elements, each press element having press face;
means for causing relative movement of the press elements toward and away from each other so as to move the press elements between an open position and a closed position;
the press faces of the press elements in their open position being adapted to receive the substrate and the facing sheet therebetween, so that the facing sheet extends beyond the edge portion of the substrate;
the press faces of the press elements in their closed position being spaced apart a distance substantially equal to the thickness of the substrate;
the press face of each press element having a periphery corresponding to the peripheral shape of the substrate; and
means for causing relative movement between the facing sheet and the edge portion of the substrate adjacent the periphery of the press faces of the press elements to bring the facing sheet into contact with the edge of the substrate.

2. Apparatus according to claim 1, wherein the means for causing relative movement between the facing sheet and the edge portion of the substrate comprises a shoulder portion on the first press element extending between the periphery thereof and the press face thereof, the shoulder portion extending transversely of the adjacent portion of the press face.

3. Apparatus according to claim 2, wherein the width of the shoulder portion is substantially equal to the thickness of the substrate.

4. Apparatus according to claim 2, wherein the first and second press elements extend outwardly of their associated press faces to form peripheral extensions, the peripheral extension of the first press element containing a peripheral recess adjacent the periphery of the first press element, the peripheral recess separating the peripheral extensions of the press elements when in their closed position.

5. Apparatus according to claim 2, including means for severing the facing sheet.

6. Apparatus according to claim 5, wherein the means for severing the facing sheet comprises a cutting edge on the first press element and a cooperative associated cutting edge on the second press element, the cutting edges severing the facing sheet during relative movement of the press elements to their closed position.

7. Apparatus according to claim 6, wherein the cutting edge of the first press element is slightly inwardly aligned of the cutting edge of the second press element, the cutting edge of the first press element moving past the cutting edge of the second press element as the press elements move relative to each other toward their closed position.

8. A method of laminating a flexible facing sheet to a substrate having a peripheral edge portion, comprising the steps of:
providing first and second press elements, each press element having a press face, and each press face having a periphery corresponding to the peripheral shape of the substrate;
causing relative movement of the press elements away from each other so as to move the press elements to an open position;
inserting the substrate and the facing sheet between the press faces so that the facing sheet is between the first press face and the substrate;
providing adhesive means between the facing sheet and the substrate;
causing relative movement of the press elements toward each other so as to move the press elements to a closed position, the press faces adhering the facing sheet to the substrate; and
causing relative movement between the facing sheet and the edge portion of the substrate adjacent the periphery of the press faces of the press elements during relative movement of the press elements to their closed position to bring the facing sheet into contact with the edge portion of the substrate and to be adhered thereto by the adhesive means.

9. A method according to claim 8, wherein relative movement between the facing sheet and the edge portion of the substrate is caused by a shoulder portion on the first press element extending between the periphery thereof and the press face thereof, the shoulder portion extending transversely of the adjacent portion of the press face.

10. A method according to claim 8, including the step of severing the facing sheet adjacent the peripheries of the press faces during relative movement of the press elements to their closed position.

*FIG.1*

*FIG.2*

*FIG.3*

Fig. 4A

Fig. 4B

Fig. 4C

Fig. 4D

EP 0 355 641 A2

_Fig.5A_

_Fig.5B_

_Fig.5C_

_Fig.5D_

FIG.6A

FIG.6B

FIG.7

FIG.6C

FIG.8